# EUROPÄISCHE PATENTSCHRIFT

(11) **EP 0 505 352 B1**
(45) Veröffentlichungstag und Bekanntmachung des Hinweises auf die Patenterteilung: **15.03.1995**
(21) Anmeldenummer: 92890065.3
(22) Anmeldetag: 19.03.1992
(51) Int. Cl.: F16J 15/18, F04B 53/16

(54) **Anordnung zum Abdichten von beweglichen Teilen von Hochdruckeinrichtungen**
Sealing device for movable parts of high pressure arrangements
Garniture d'étanchéité pour parties mobiles d'appareils à haute pression

(30) Priorität: 21.03.1991 AT 635/91
(43) Veröffentlichungstag der Anmeldung: 23.09.1992
(73) Patentinhaber: BÖHLER HOCHDRUCKTECHNIK GMBH, A-8605 Kapfenberg (AT)
(72) Erfinder: Retschnik, Gerald, Ing., A-8712 Niklasdorf (AT); Trieb, Franz, Ing., A-8605 Kapfenberg (AT)
(74) Vertreter: Wildhack, Helmut, Dipl.-Ing. Dr.

(56) Entgegenhaltungen:
- EP-B- 0 114 590

## Beschreibung

Die Erfindung betrifft eine Anordung zum Abdichten von beweglichen Teilen von Hochdruckeinrichtungen, vorzugsweise von oszillierend bewegten Plungern bzw. Kolben von Hochdruckpumpen, insbesondere für flüsssige Medien, von rotierenden Wellen von Hochdruckapparaten oder dgl., mit einem druckraumseitig in der abzudichtenden Öffnung gelegenen, vorzugsweise mit einem Vorspannring versehenen Ring, der mit im wesentlichen parallel zur Achse des bewegbaren Teiles gerichteten Kräften des komprimierten Mediums beaufschlagbar, aus plastisch und/oder elastisch verformbaren Material gefertigt und vom bewegbaren Bauteil durchsetzt ist, wobei das druckraumferne Ende des Ringes eine umlaufende, dem bewegbaren Teil zugekehrte Ausnehmung aufweist, die einen an die Ausnehmung mit Flächenkontakt angepaßten umlaufenden, dem bewegbaren Teil zugekehrten, druckraumseitig gelegenen Endvorsprung einer Hülse aufnimmt, wobei in dem dem bewegbaren Bauteil entfernt gelegenen Bereich der Öffnung zwischen dem Ring und der Hülse ein Stützring eingefügt ist, welcher sich mit einer seiner Flächen am Ring und mit einer weiteren seiner Flächen auf der Hülse abstützt, und wobei der Ring durch den im Druckraum herrschenden Druck gegen die Hülse gepreßt wird und zur Abdichtung des Druckraumes den Endvorsprung gegen den bewegbaren Teil andrückt.

Derartige Hochdruckdichtungsanordnungen, z.B. für Verdrängerkolben von Kolbenpumpen sind bekannt; bei hohen Drücken im Bereich von mehreren Tausend bar, wie sie z.B. bei Pumpen für Flüssigkeitsstrahlschneideeinrichtungen notwendig sind, haben sich die derzeit bekannten Hochdruckspalteinrichtungen
mit Einrichtungen zum Abdichten von bewegbaren Bauteilen, wie aus der EP-A-0 114 590 bekannt, funktionstechnisch durchaus bewährt. Für die neuesten Anforderungen nach verlängerter Lebensdauer bei höheren Drücken haben sich jedoch die Abdichtungen als nicht ausreichend erwiesen. Insbesondere sind die Standzeiten dieser Dichtungen nicht ausreichend, bzw. ist der Verschleiß der Dichtungen und der beweglichen Teile, an denen die Dichtungen angreifen, zu hoch. Es hat sich gezeigt, daß Hülsen, die druckseitig keilförmig zum bewegten Bauteil hin auslaufen, zwar eine gute Abdichtung durch Anpressung bei radialer elastischer Deformation bewirken, bei längerem Betrieb jedoch innenseitig eine zur Keilspitze hin zunehmende Materialabtragung erfahren. Dies kann dadurch begründet sein, daß die Biegesteifigkeit des keilförmigen Endenbereiches der Hülse zur Keilspitze hin geringer wird und somit bedingt durch den allseitigen Innendruck die Anpreßkraft an die Oberfläche des bewegten Bauteiles steigt. Bei erniedrigtem Druck bzw. beim Saughub des Plungers erfolgt eine elastische, radial nach außen gerichtete Aufweitung, insbesondere der Spitze des Keilringes der Hülse und damit eine Spaltbildung zwischen dieser und dem bewegbaren Bauteil. In diesen Spalt wird bei einer nachfolgenden Druckerhöhung der zum Druckraum vorgelagerte, aus plastisch und/oder elastisch verformbarem Material gefertigte Ring teilweise eingepreßt, was zu weiteren Verschleißerscheinungen, örtlicher Temperaturerhöhung, Undichtheit u.dgl. führen kann.

Der Erfindung liegt die Aufgabe zugrunde, eine Anordnung der eingangs genannten Art weiterzubilden, sodaß die erwähnten Nachteile vermieden werden.

Dies wird bei einer Anordnung der eingangs genannten Art erfindungsgemäß dadurch erreicht, daß die an die Fläche der Ausnehmung des Ringes anliegende Fläche(n) des Endvorsprunges der Hülse in einem Schnitt durch die Achse des bewegbaren Bauteiles, von ihrem druckraumseitigen, am den bewegbaren Bauteil anliegenden Endpunkt bis zu ihrem an der Wandung der Öffnung anliegenden Enden einen von einer durchgehenden Geraden abweichenden Verlauf zeigt (zeigen), und zumindest einen geraden Teilbereich und/oder zumindest einen gekrümmten Teilbereich umfaßt (umfassen). Erfindungsgemäß ist ferner vorgesehen, daß die Hülse im Bereich des Flächenkontaktes mit dem Ring und dem Stützring von der Oberfläche des bewegten Teiles bis zur Wandung der Öffnung, insbesondere im Bereich des Endvorsprunges, mindestens zwei Teilbereiche aufweist, wobei der erste dem Druckraum am nächsten liegende Teilbereich, beginnend von dem am bewegten Bauteil anliegenden druckraumseitigen Endpunkt in Gegenrichtung zum Druckraum mit einer bezogen auf die Längseinheit höheren Steigerung der örtlichen Steifigkeit gegen konzentrische radiale elastische Deformation als diejenige des an diesen anschließenden zweiten Teilbereiches ausgebildet ist.

Eine derartige Anordnung, die sich insbesondere für nicht schmierende Flüssigkeiten eignet, eine geringe Anzahl von Einzelteilen umfaßt und eine zuverlässige Dichtwirkung aufweist, ermöglicht ein verschleißarmes Arbeiten, hohe Standzeiten und eine Herabsetzung des Verschleißes an der Oberfläche der bewegbaren Teile, an denen die Dichtung anliegt.

Es wurde gefunden, daß durch eine Ausbildung des druckraumseitigen Hülsenendes bzw. des Endvorsprunges mit mindestens zwei Teilbereichen mit unterschiedlicher Steigerung der örtlichen Steifigkeit gegen konzentrische radiale elastische Deformation die örtliche Flächenpressung auf den bewegbaren Teil derart einstellbar ist, daß auch bei hohen Drücken und geringer Leckage der Verschleiß der Dichteinrichtung wesentlich verringert und somit die Lebensdauer erhöht werden.

Wesentlich ist dabei die geometrische Ausbildung des Endvorsprunges bzw. die Gestalt der mit den Ring und dem Stützring in Kontakt befindlichen Flache auch in Abhängigkeit vom Druck in der Hochdruckeinrichtung. Auch bei höchsten Drücken ist ein geringer Verschleiß erreichbar, da der Dichtungsdruck nur geringfügig über dem Druck liegt, der im abzudichtenden Druckraum herrscht und da dieser Dichtungsdruck über eine relativ große Fläche dosiert verteilt werden kann.

Bei dieser Dichtungsanordnung kommt dem druck- bzw. kraftbeaufschlagten Ring insofern Dichtfunktion zu, als er sich elastisch und/oder plastisch verformt und einen Endfortsatz der Dichtungshülse gegen den beweglichen Teil drückt. Gleichzeitig kommt der Hülse auch Führungsfunktion für den beweglichen Bauteil zu, sodaß die Führungsfunktion und eine dosierbar einstellbare Abdichtungswirkung kombiniert werden. Wichtig ist es jedoch, daß ein geradflächiges Abgleiten des Materiales des Dichtungsringes gegenüber dem Material der Führungshülse vermieden wird, da durch die Ausbildung von Knickstellen bzw. Krümmungen bzw. eines Verlaufes mit unterschiedlicher Krümmung bzw. unterschiedlichen Steigungen der geraden Bereiche ein rein geradliniges Abgleiten verhindert wird, sodaß die Druckwirkung des Ringes auf den Endvorsprung der Hülse verbessert wird. Der als Dichtlippe fungierende Endfortsatz der Hülse zentriert sich auf dem beweglichen Teil durch den Druck des verformbaren Ringes, und durch entsprechende Krümmung des Verlaufes der Fläche des Endvorsprunges können eine entsprechende mechanische Biegungslinie des Endvorsprunges und eine entsprechende Kraftverteilung längs dieser Biegungslinie zur Ausübung des entsprechenden Abdichtungsdruckes erreicht werden.

Bevorzugt ist es, wenn der Verlauf der Fläche des Endvorsprunges bzw. der Verlauf der Ausnehmung des Ringes im Schnitt durch die Achse des bewegbaren Teiles eine Knick- bzw. Biegungsstelle aufweist, welche Knick- bzw. Biegungsstelle in einem Abstand von der Oberfläche des bewegbaren Teiles gelegen ist, der geringer als die Hälfte, vorzugsweise geringer als ein Drittel, des Zwischenraumes zwischen der Wandung der Öffnung im Gehäuse und der Oberfläche des bewegbaren Teiles beträgt. Ferner ist es vorteilhaft, wenn der Verlauf des Endvorsprunges im Schnitt in zwei oder drei aufeinanderfolgenden gerade und/oder gekrümmte Teilbereich mit unterschiedlicher Steigung und/oder Krümmung unterteilt ist bzw. wenn von der Knickstelle ein nach vom bewegbaren Teil nach außen weg gekrümmter Teilbereich bis zum Anlagepunkt des Stützringes an der Hülse anschließt bzw. der erste Teilbereich des Endvorsprunges der Hülse konvexe Krümmung bis zur Knickstelle aufweist. Je nach dem Verlauf des ersten Teilbereiches des Endvorsprunges der Hülse wird der durch den im Druckraum herrschenden Druck in Richtung der Hülse verschoebene und gegebenenfalls plastisch verformte Ring in Anlage an den Endvorsprung gebracht und durch Auswahl der entsprechenden Neigung bzw. Krümmung des Flächenverlaufes kann die Krafteinbringung in Abhängigkeit vom Druck, von den verwendeten Materialien usw. variiert werden.

Eine zweckmäßige Ausbildung des Verlaufes zeigte sich, wenn der erste, gegebenenfalls gekrümmte Teilbereich des Verlaufes einen durchschnittlichen Steigungswinkel von 50° bis 90° mit der Achse des bewegbaren Bauteiles einschließt, daß der folgende, gegebenenfalls gekrümmte Teilbereich einen durchschnittlichen Steigungswinkel von 0° bis 70°, vorzugsweise von 0° bis 40° aufweist, und daß an diesen Teilbereich gegebenenfalls ein ebenfalls gekrümmter folgender Teilbereich mit einem durchschnittlichen Steigungswinkel von 30° bis 80°, vorzugsweise 40° bis 60°, folgt.

Vorteilhaft ist es ferner, wenn der den (die) gekrümmte(n) und/oder gerade(n) Teilbereich(e) aufweisende Verlauf nur bis zum Anlagepunkt des Stützringes an der Hülse reicht, und daß gegebenenfalls über den Bereich, längs dem die Hülse und der Stützring in Flächenkontakt stehen, ein im wesentlichen gerader bzw. ebener Verlauf ausgebildet ist bzw. daß in einem Schnitt durch die Achse der Verlauf des Stützringes, beginnend mit seinem druckraumseitigen, an dem Gehäuse, in dem die Bohrung ausgebildet ist, anliegenden Endpunkt, zumindest teilweise einen gekrümmten Verlauf zeigt, und vorzugsweise stetig in den Verlauf der Fläche des Endvorsprunges übergeht.

Vorteilhaft ist es ferner, wenn der Ring gegen den Druckraum hin in einem Abstand zu einer diesem Druckraum abgekehrten, vorzugsweise ebenen Stirnfläche der den bewegbaren Teil umgebenden, in der Öffnung des Gehäuses sitzenden Zwischenhülse angeordnet ist; es ergibt sich eine begünstige Ausbildungsform, da in der hohem Druck ausgesetzten Bohrung keine abrupten Querschnitts- und Materialstarkenänderungen vorhanden sind, wodurch die Festigkeit der gesamten Einrichtung erhöht wird.

Der Abstand zischen der Führungsbüchsenstirnfläche und dem Ring kann z.B. kleiner als 1 mm sein und infolge des durch diesen freien Raum eintretenden unter Druck stehenden Mediums wird eine axial nach außen gerichtete Kraft auf den Ring ausgeübt und preßt diesen unter gleichzeitiger Verformung gegen den Endfortsatz der Hülse.

Das Material, aus dem der Ring vorteilhafterweise gebildet ist, ist Kunststoff, insbesondere bevorzugt sind Polymere auf der Basis von Tetrafluoräthylen bzw. Polymere auf der Basis gegebenenfalls fluorierter Polyalkylene und insbesondere solche aus einem PTFE-Compound-Werkstoff, Kunststoffe, insbesondere fluorierte Polyäthylene haben den Vorteil eines sehr geringen Reibungskoeffizienten, sodaß auch bei relativ hohen Anpreßkräften auf dem abzudichtenden beweglichen Teil der Verschleiß des Ringes äußerst gering gehalten werden kann.

Der Werkstoff für die Hülse ist vorteilhafterweise Stahl oder eine Kupfer-Beryllium-Legierung; vorteilhafterweise ist die Länge der Hülse gleich dem oder größer als ihr Außendurchmesser; soferne sie zu kurz gebaut ist, kann sie unter Umständen ihren Führungsfunktionen für den beweglichen Teil nicht optimal nachkommen.

Um gegen die Wandung der Öffnung hin eine hochdrucksichere Abdichtung zu erreichen, und andererseits auch, um dem Ring eine Stütze zu geben, kann es vorteilhaft sein, wenn der Bereich geringeren Durchmessers am Ring im wesentlichen kegelförmig im Bereich des Ringes mit im wesentlichen dem Innendurchmesser der Öffnung entsprechenden Außendurchmesser übergehend ausgebildet ist, wobei gegebenenfalls der Bereich dieses Überganges aus einem vorzugsweise aus Metall gefertigte Stützring umschlossen ist.

Zur Außenseite hin ist die erfindungsgemäße Dichteinrichtung vorteilhafterweise so ausgebildet, daß die mit ihrem Endfortsatz in die Ausnehmung des Ringes ragende Hülse mittels einer vorzugsweise ihrerseits durch ein lösbares Halterungselement gehaltenen Druckbüchse bzw. Preßbüchse in Lage gehalten und gegebenenfalls mit im wesentlichen axial zum Druckraum hingerichteter Kraft in Richtung auf die Stirnfläche der in der Öffnung angeordneten Zwischenhülse gedrückt ist. Die Stützringe werden vorteilhafterweise aus rostfreiem Stahl hergestellt; das Material des beweglichen Bauteiles ist üblicherweise Hartmetall.

Vorteilhafte Ausführungsformen der Erfindung werden im folgenden anhand der Zeichnung, der folgenden Beschreibung und der Patentansprüche näher erläutert. In der Zeichnung werden Ausführungsbeispiele der Erfindung dargestellt und anhand der folgenden Beschreibung naher erläutert. Es zeigen Fig.1 eine schematische Schnittansicht durch eine erfindungsgemäße Abdichtungsanordnung einer Hochdruckeinrichtung, Fig.2 und 3 schematische Ansichten von erfindungsgemäßen Abdichtungsanordnungen, Fig.4a, 4b, 4c, 4d und 4e verschiedene Ausführungsformen von Ringen und Hülsen.

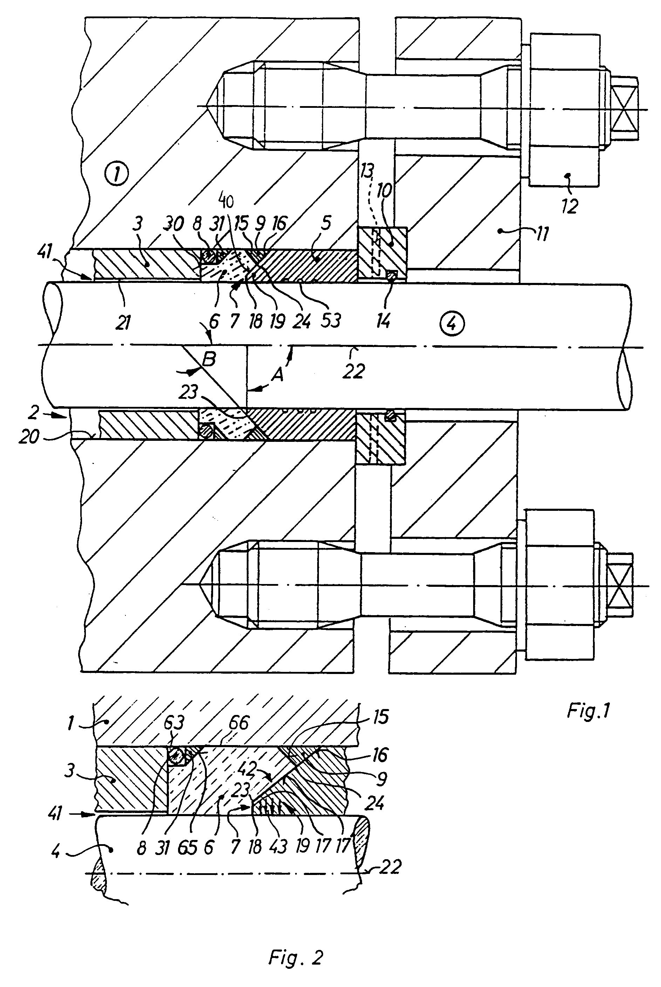

Bei der in Fig.1 beispielsweise dargestellten erfindungsgemäßen Abdichtungsanordnung, die z.B. für Druckübersetzer zum Hochdruckflüssigkeitsschneiden von Gegenständen eingesetzt werden kann, ist in einem Hochdruckzylinder bzw. Gehäuse 1 ein beweglicher Bauteil 4, z.B. ein Druckkolben oder eine Welle, in einem Hohlraum 2, insbesondere einer Öffnung, vorgesehen, in welche Öffnung 2 eine Zwischenhülse 3 an die Wandung 20 des Hohlraumes anliegend eingesetzt ist. Diese Zwischenhülse 3 umgibt den in ihr gelagerten, sich oszillierend bewegenden Plunger 4, der beispielsweise aus Hartmetall gefertigt ist und vorteilhafterweise eine Oberflächenrauhheit im Bereich von 0,01 mm aufweist. An der Zwischenhülse 3 bzw. an deren dem Druckraum abgekehrten Seite bzw. Stirnfläche 30 anliegend, ist ein Dichtungsring 6 angeordnet, in dessen dem Druckraum abgekehrten Endbereich eine Ausnehmung 7 ausgebildet ist, die zum Plunger 4 hin geöffnet ist und in welche der Endfortsatz 19 einer Hülse 5 hineinragt bzw. mit seiner(n) Fläche(n) bzw. Wandung(en) 17,17',17'',17''' an der Wandfläche 40 des Ringes 6 anliegt. Die Hülse 5 dient gleichzeitig zur Lagerung des Plungers 4. Der Ring 6 meist einen an die Stirnfläche 30 der Zwischenhülse 3 anliegenden Bereich 63 geringeren Außendurchmessers auf, der über einen kegelförmigen Teilbereich 65 in den Bereich 66 größeren mit dem Durchmesser der Bohrung 2 übereinstimmenden Außendurchmesser aufweisenden Bereich des Ringes 6 übergeht (Fig.2). Den Bereich 63 kleineren Durchmessers umschließt ein Vorspannring 8, im gezeigten Fall ein O-Ring, welcher den Ring 6 in seinem Bereich 63 mit seiner radial zur Achse des Plungers 4 hin gerichteten Kraft beaufschlagt, sodaß eine Abdichtung zwischen der Ringinnenfläche und dem Plunger 4 gegeben ist. Anliegend an den kegelförmigen Übergangsteil 65 ist ein ein Auskriechen des Ringes 6 verhindernder Stütz- bzw. Kammerungsring 31 angeordnet. Anschließend an die Ringstirnfläche des Ringes 6 ist ein vorteilhafterweise einen dreieckigen bzw. im wesentlichen dreieckförmigen Querschnitt aufweisender Stützring 9 angeordnet, welcher im wesentlichen der Kontur des plungerfernen Teiles des Endes der Hülse 5 folgt.

Bei einem Druckhub des Plungers 4 wird in dem sich im Druckraum und sich im schmalen Spalt 21 zwischen Plunger 4 und der Innenfläche der in die Öffnung 2 eingesetzten Zwischenhülse 3 befindlichen Medium an der dem Druckraum zugekehrten Seite des Ringes 6 ein Druck aufgebaut, der auf den Ring 6 eine vom Druckraum weg axial gerichtete Kraft ausübt. Durch diesen Druck wird der Ring 6 plastisch und/oder elastisch verformt, und drückt seinerseits auf den Endvorsprung 19 der Hülse 5 und drückt dabei den Endvorsprung 19 an die Außenfläche des Plungers 4. Durch spezielle Ausbildung der Außenfläche 17 des Endvorsprunges 19 bzw. der mit dem Ring 6 in Kontakt stehenden Flächenteile des Endvorsprunges 19 erfolgt nunmehr eine dosierte verteilte Druckeinleitung über den mittleren Bereich des Endvorsprunges 19 in den dem Plunger 4 anliegenden Bereich des Endvorsprunges 19; die Axialkraft des Ringes 6 wird im Bereich des Endfortsatzes 19 teilweise in eine radial nach innen zum Plunger 4 hingerichtete Kraftkomponente umgewandelt, deren Wirkung über einen relativ langen Flächenbereich des Endvorsprunges 19 verteilt wird und in Abhängigkeit der Steifigkeit des Endvorsprunges bzw. der gewählten Materialien dosiert verteilt werden kann.

Nach außen hin ist die Hülse 5, welche in der gezeigten Anordnung an ihrer Innenseite zusätzlich noch ein durch Nuten 53 gebildetes Dichtlabyrinth aufweist, von einer Preßbüchse 10 in Lage gehalten, welche ihrerseits in einer entsprechend geformten Ausnehmung eines über Verbindungselemente 12 lösbar mit dem Hochdruckzylinder 1 verbundenen, etwa stopfbüchsenbrillenartig ausgebildeten Halterungselement 11 sitzend angeordnet ist. Die Preßbüchse 10 selbst weist an ihrer dem Plunger 4 zugekehrten Seite einen in einer Aufnahme angeordneten O-Dichtring 14 auf. Außerdem sind in der Büchse Kanäle 13 für die Zuführung eines Schmiermittels (gegebenfalls auch welche für die Abführung von Leckage) angeordnet, wodurch der Verschleiß von Plunger 4 und Hülse 5 vermindert wird.

In Fig.1 ist eine Form eines erfindungsgemäßen Verlaufes des Endvorsprunges 19 der Hülse 5 dargestellt; beginnend mit seinem vorderen Endpunkt 18, mit dem der Endvorsprung 19 an Plunger 4 anliegt, besitzt der Endvorsprung 19 eine im wesentlichen senkrecht zum Plunger 4 verlaufende, im wesentlichen ebene Endfläche, die über eine Abknickung 23 in eine ebenfalls im wesentlichen ebene unter einem Winkel B zur Längsachse 22 des Plungers 4 geneigte Fläche übergeht. Im Endbereich dieser Fläche wird diese Fläche von einer Fläche des Ringes 9 kontaktiert. Die im wesentlichen im rechten Winkel zum Plunger 4 stehende Endfläche des Endvorsprunges 19 bewirkt, daß die vom Ring 6 in den Endvorsprung 19 eingeleitete Kraft nur im wesentlichen über den Flächenbereich zwischen der Abknickung 23 und dem Ring 9 eingeleitet wird, wodurch eine Verteilung der eingeleiteten Kraft über einen größeren Flächenbereich des Endvorsprunges 19 erreicht wird, und damit der Verschleiß der Dichtfläche des Endvorsprunges 19 und der Außenfläche des Plungers 4 an den Berührungsstellen verringert wird.

Fig.2 zeigt im Detail eine Ausführung entsprechend Fig.1 und man erkennt die gemäß den Pfeil 42 eingeleitete Kraftkomponente, die durch den Ring 6 auf den Endvorsprung 19 ausgeübt wird und darin resultiert, daß die Dichtungskraft 43 sich über einen größeren Flächenbereich verteilt. Es kann somit der Abdichtungsdruck auf einen Wert verringert werden, der gerade etwas über dem Druck im Druckraum liegt, weil durch die Vergrößerung der Dicht- bzw. Anlageflächen erhöhte Sicherheit gegeben ist. Die zur Oberfläche des Plungers 4 senkrechte bzw. im wesentlichen senkrechte Verlauf der Fläche 17 entspricht einer sehr großen Steigerung (nahezu unendlich großen) Steigerung des ersten Teilbereiches des Endvorsprunges 19, welcher großen Steigerung ein Teilbereich mit einer geringeren Steigerung folgt, auf welchen Teilbereich die vom Ring 6 ausgeübten Druckkräfte in radiale Abdichtungskräfte umgewandelt werden.

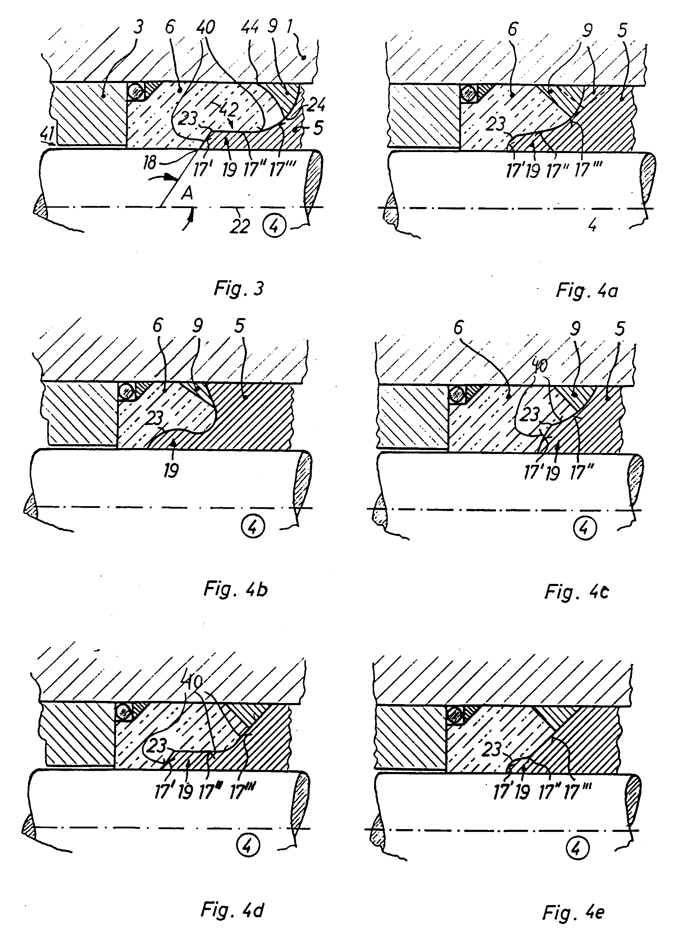

Fig.3 zeigt eine Ausführungsform, bei der der Endvorsprung 19 eine beträchtliche Länge erreicht, und einen vorderen Flächenverlauf 17' besitzt, der in einem Winkel A von etwa 60° zur Längsachse 22 des Plungers 4 geneigt verläuft. Diese im wesentlichen ebene oder leicht konvex gekrümmte Fläche 17' verläuft bis zu einem Knickpunkt bzw. zu einer Abbiegung 23; ab diesem Knickpunkt 23 schließt eine ebene bzw. leicht gekrümmte Fläche 17'' an, die im wesentlichen zur Achse 22 des Plungers 4 parallel oder leicht ansteigend geneigt verläuft. An diese Fläche 17'' schließt eine gekrümmte Flache 17''' an, welche eine stärkere mittlere Steigung (Anstieg einer Verbindungslinie des Anfangs- und Endpunktes der Kurve) besitzt und gegebenenfalls mit dieser Steigung und/oder Krümmung bis zum vorderen oberen Ende der Hülse 5 ausgebildet ist. Der Stützring 9 besitzt ebenfalls zwei gekrümmte Anlageflächen und entspricht der Flächenform der Hülse 5 und der Flächenform des Ringes 6. Die Fläche des Stützringes 9, mit dem dieser in Kontakt mit dem Ring 6 steht, kann beginnend bei einem druckraumseitigen Endpunkt 44 gekrümmte und/oder gerade Bereiche besitzen. Zweckmäßig ist es, wenn der Stützring 9 im Endpunkt 24 verlaufend in die Fläche des Endvorsprunges 19 der Hülse 5 übergeht.

Fig.4a zeigt eine Ausführungsform, bei der der Endvorsprung 19 einen ersten gekrümmten Verlauf 17' besitzt, der in einen gekrümmten Verlauf 17'' übergeht und über einen Wendepunkt in einen gekrümmten Endbereich 17''' bis zum Stützring 9 verläuft. Der dritte Verlauf 17''' kann durch eine Gerade ersetzt werden, wie strichliert angedeutet ist.

Die weitere Ausführungsform gemäß Fig.4b zeigt, daß der Endvorsprung 19 zur Einstellung das Abbiegungsverhaltens ab einem Wendepunkt bzw. ab dem Knickpunkt 23 auch mit abnehmender Dicke ausgebildet sein kann, bevor er in seinen gekrümmten oder ebenen nach außen abgehenden Endbereich übergeht.

Fig.4c zeigt eine Ausführungsform, bei der der Endvorsprung 19 der Hülse 5 von zwei Flächen 17' und 17'' begrenzt wird, die beide gekrümmt sind und über den Knickpunkt 23 ineinander übergehen.

Fig.4d zeigt eine Ausführungsform einer erfindungsgemäßen Abdichtung, bei der die Flächen 17' und 17'' des Endvorsprunges 19 an einem Knickpunkt 23 aneinander anschließen, wobei der Flächenbereich 17'' nahezu bzw. im wesentlichen parallel zur Längsachse 22 des Plungers 4 verläuft. Über eine relativ kleine Rundung geht die Fläche 17'' in eine im wesentlichen ebene Fläche 17''' über.

Fig.4e zeigt in ihrem oberen Teilbereich eine Ausbildung eines geraden Verlaufes des Endvorsprunges 19, wobei der Knickpunkt 23 weiter in Richtung auf das Gehäuse 1 zu verlegt ist. Im unteren Teilbereich zeigt der Endvorsprung 19 einen relativ kurzen, in den Endpunkt 18 auslaufenden vorderen Bereich, der im Schnitt zwei gekrümmte Flächen 17' und 17'' zeigt, wobei die Fläche 17'' in den anschließenden geraden Verlauf 17''' übergeht.

Der Knickpunkt 23 kann auch in Form einer gerundeten Übergangsfläche ausgebildet werden.

## Patentansprüche

1. Anordnung zum Abdichten von beweglichen Teilen von Hochdruckeinrichtungen, vorzugsweise von oszillierend bewegten Plungern (4) bzw. Kolben von Hochdruckpumpen, insbesondere für flüssige Medien, von rotierenden Wellen von Hochdruckapparaten oder dgl., mit einem druckraumseitig in der abzudichtenden Öffnung (2) gelegenen, vorzugsweise mit einem Vorspannring (8) versehenen Ring (6), der mit im wesentlichen parallel zur Achse (22) des bewegbaren Teiles (4) gerichteten Kräften des komprimierten Mediums beaufschlagbar, aus plastisch und/oder elastisch verformbarem Material gefertigt und vom bewegbaren Bauteil (4) durchsetzt ist, wobei das druckraumferne Ende des Ringes (6) eine umlaufende, dem bewegbaren Teil (4) zugekehrte Ausnehmung (7) aufweist, die einen an die Ausnehmung (7) mit Flächenkontakt angepaßten umlaufenden, dem bewegbaren Teil (4) zugekehrten, druckraumseitig gelegenen Endvorsprung (19) einer vorzugsweise einstückigen Hülse (5) aufnimmt, wobei in dem dem bewegbaren Bauteil (4) entfernt gelegenen Bereich der Öffnung (2) zwischen dem Ring (6) und der Hülse (5) ein Stützring (9) eingefügt ist, welcher sich mit einer seiner Flächen (15) am Ring (6) und mit einer weiteren seiner Flächen (16) auf der Hülse (5) abstützt, und wobei der Ring (6) durch den im Druckraum herrschenden Druck gegen die Hülse (5) gepreßt wird und zur Abdichtung des Druckraumes den Endvorsprung (19) gegen den bewegbaren Teil (4) andrückt, dadurch gekennzeichnet, daß die an die Fläche (40) der Ausnehmung (7) des Ringes (6) anliegende Fläche(n) (17,17',17'',17''') des Endvorsprunges (19) der Hülse (5) in einem Schnitt durch die Achse (22) des bewegbaren Bauteiles (4), von ihrem druckraumseitigen, an dem bewegbaren Bauteil (4) anliegenden Endpunkt (18) bis zu ihrem an der Wandung (20) der Öffnung (2) anliegenden Enden einen von einer durchgehenden Geraden abweichenden Verlauf zeigt (zeigen), und zumindest einen geraden Teilbereich und/oder zumindest einen gekrümmten Teilbereich umfaßt (umfassen).

2. Anordnung nach Anspruch 1, dadurch gekennzeichnet, daß die Hülse (5) im Bereich des Flächenkontaktes mit dem Ring (6) und dem Stützring (9) von der Oberfläche des bewegten Teiles (4) bis zur Wandung (20) der Öffnung (2), insbesondere im Bereich des Endvorsprunges (19), mindestens zwei Teilbereiche aufweist, wobei der erste dem Druckraum am nächsten liegende Teilbereich beginnend von dem am bewegten Bauteil (4) anliegenden druckraumseitigen Endpunkt (18) in Gegenrichtung zum Druckraum mit einer bezogen auf die Längseinheit höheren Steigerung der örtlichen Steifigkeit gegen konzentrische radiale elastische Deformation als diejenige des an diesen anschließenden zweiten Teilbereiches ausgebildet ist.

3. Anordnung nach Anspruch 1 oder 2, dadurch gekennzeichnet, daß der den (die) gekrümmte(n) und/oder gerade(n) Teilbereich(e) aufweisende Verlauf nur bis zum Anlagepunkt (24) des Stützringes (9) an der Hülse (5) reicht.

4. Anordnung nach einem der Ansprüche 1 bis 3, dadurch gekennzeichnet, daß über den Bereich, längs dem die Hülse (5) und der Stützring (9) in Flächenkontakt stehen, ein im wesentlichen gerader bzw. ebener Verlauf ausgebildet ist.

5. Anordnung nach einem der Ansprüche 1 bis 4, dadurch gekennzeichnet, daß in einem Schnitt durch die Achse (22) der Verlauf des Stützringes (9), beginnend mit seinem druckraumseitigen, an dem Gehäuse (1), in dem die Wandung (20) der Öffnung (2) ausgebildet ist, anliegenden Endpunkt (44), zumindest teilweise einen gekrümmten Verlauf zeigt, und vorzugsweise stetig in den Verlauf der Fläche (17,17',17'',17''') des Endvorsprunges (19) der Hülse (5) übergeht.

6. Anordnung nach einem der Ansprüche 1 bis 5, dadurch gekennzeichnet, daß der Verlauf des Endvorsprunges (19) im Schnitt in zwei oder drei aufeinanderfolgenden gerade und/oder gekrümmte Flächen (17,17',17'',17''') mit unterschiedlicher Steigung und/oder Krümmung unterteilt ist.

7. Anordnung nach einem der Ansprüche 1 bis 6, dadurch gekennzeichnet, daß der Verlauf der Fläche (17) des Endvorsprunges (19) bzw. der Verlauf der Ausnehmung (7) des Ringes (6) im Schnitt durch die Achse (22) des bewegbaren Teiles (4) eine Knick- bzw. Biegungsstelle (23) aufweist, welche Knick- bzw. Biegungsstelle (23) in einem Abstand von der Oberfläche des bewegbaren Teiles (4) gelegen ist, der geringer als die Hälfte, vorzugsweise geringer als ein Drittel, des Zwischenraumes zwischen der Wandung (20) der Öffnung (2) im Gehäuse (1) und der Oberfläche des bewegbaren Teiles (4) beträgt.

8. Anordnung nach einem der Ansprüche 1 bis 7, dadurch gekennzeichnet, daß der vom Endpunkt (18) des Endvorsprunges (19) der Hülse (5) abgehende gerade Teilbereich in einem Winkel (A) von 50° bis 90° zur Achse (22) des bewegbaren Teiles (4) geneigt ist, und daß ein von der Knickstelle (23) ausgehender gerader Teilbereich mit der Achse (22) des bewegbaren Bauteiles (4) einen Winkel von 0° bis 70° einschließt.

9. Anordnung nach einem der Ansprüche 1 bis 8, dadurch gekennzeichnet, daß der Ring (6) gegen den Druckraum hin im Abstand zu einer dem Druckraum abgekehrten vorzugsweise ebenen Stirnfläche (30) einer den beweglichen Teil (4) umgebenden, in der Öffnung (2) des Gehäuses (1) sitzenden Zwischenhülse (3) angeordnet ist.

10. Anordnung nach Anspruch 9, dadurch gekennzeichnet, daß die mit ihrem Endfortsatz (19) in die Ausnehmung (7) des Ringes (6) ragende Hülse (5) mittels einer, vorzugsweise ihrerseits durch ein lösbares Halterungselement (11) gehaltenen Druck- bzw. Preßbüchse (10) in Lage gehalten und gegebenenfalls mit im wesentlichen axial zum Druckraum hin gerichteter Kraft in Richtung auf die Stirnfläche (30) der in der Öffnung (2) angeordneten Zwischenhülse (3) gedrückt ist.

11. Anordnung nach einem der Ansprüche 1 bis 10, dadurch gekennzeichnet, daß die Hülse (5) eine Länge aufweist, die gleich dem oder größer als ihr Außendurchmesser ist.

12. Anordnung nach einem der Ansprüche 7 bis 11, dadurch gekennzeichnet, daß von der Knickstelle (23) ein vom bewegbaren Teil (4) nach außen weg gekrümmter Teilbereich bis zum Anlagepunkt (24) des Stützringes (9) an der Hülse (5) anschließt.

13. Anordnung nach einen der Ansprüche 7 bis 12, dadurch gekennzeichnet, daß der erste Teilbereich des Endvorsprunges (19) der Hülse (5) konvexe Krümmung bis zur Knickstelle (23) aufweist.

14. Anordnung nach einem der Ansprüche 1 bis 13, dadurch gekennzeichnet, daß die Hülse (5) aus Stahl oder einer Nichteisenmetall-Legierung, insbesondere einer Kupfer-Legierung gefertigt ist.

15. Anordnung nach einem der Ansprüche 1 bis 14, dadurch gekennzeichnet, daß die Teilbereiche mit geraden Verlauf des Schnittes der Flächen (17,17',17'', 17''') unterschiedliche Steigung in Bezug auf die Längsachse des bewegbaren Teiles (4) aufweisen, wobei die Steigung im ersten Bereich größer ist als in dem an diesen Teilbereich anschließenden Teilbereich.

16. Anordnung nach einem der Ansprüche 1 bis 15, dadurch gekennzeichnet, daß die Krümmung des Verlaufes in den einzelnen Teilbereichen über die Länge des Bereiches verändert ist.

## Claims

1. A device for sealing the movable parts of high pressure apparatus, preferably of the oscillatingly moved plungers (4) or pistons of high pressure pumps, in particular for liquid media, of rotating shafts for high pressure apparatus or the like, with a ring (6) preferably provided with a biassing ring (8) positioned on the delivery side of the pump in the orifice (2) to be sealed, ring (6) being subjectable to forces of the compressed medium directed substantially parallelly to the axis (22) of the movable part (4), being made of plastically and/or elastically deformable material and pierced by the movable part (4), the end of the ring (6) on the delivery side of the pump having a peripheral recess (7) facing the movable part (4) and receiving the peripheral end projection (19) of a preferably one-piece sleeve (5), the end projection (19) being adapted with surface contact to recess (7) and facing movable part (4), a supporting ring (9) being inserted in the area of the orifice (2) remote from the movable part (4) between ring (6) and sleeve (5) and supported by one of its faces (15) an ring (6) and by another one of its faces (16) an sleeve (5), ring (6) being forced against sleeve (5) by the pressure prevailing in the pressure space and forcing the end projection (19) against the movable part (4) far sealing the pressure space, characterized in that face(s) (17, 17', 17'', 17''') of end projection (19) of sleeve (5) abutting face (40) of recess (7) of ring (6) in a section through the axis (22) of movable part (4) from their terminal point (18) on the delivery side of the pump an the movable part (4) to their end(s) on wall (20) of orifice (2) show(s) a course deviating from a continuous straight line and comprise(s) at least one linear partial area and/or at least one curved partial area.

2. The device according to claim 1, characterized in that the sleeve (5) is provided in the area of the surface contact with the ring (6) and the supporting ring (9) from the surface of movable part (4) to the wall (20) of orifice (2), in particular in the area of end projection (19), with at least two partial areas, the first partial area, being closest to the pressure space, starting from end point (18) abutting movable part (4) and positioned on the delivery side of the pump, being formed in counter direction to the pressure space with an increase in local rigidity against concentric radial elastic deformation in relation to the longitudinal unit as compared to that of the second partial area adjacent to it.

3. The device according to claim 1 or 2, characterized in that the partial area(s) of curved and/or linear course only reach as far as the abutting point (24) of supporting ring (9) on sleeve (5).

4. The device according to any one of the claims 1 to 3, characterized in that a substantially linear or plane course prevails over the area along which sleeve (5) and supporting ring (9) are in surface contact.

5. The device according to any one of the claims 1 to 4, characterized in that in a section through the axis (22), the course of supporting ring (9) starting from its end point (44)on the delivery side of the pump abutting the housing (1) in which wall (20) of orifice (2) is formed, is at least partially curved and preferably continuously merges with the course of face(s) (17, 17', 17'', 17''') of the end projection (19) of sleeve (5).

6. The device according to any one of the claims 1 to 5, characterized in that the course of the end projection (19) in section is subdivided into two or three consecutive linear and/or curved surfaces (17,17',17'', 17''') of different inclination and/or curvature.

7. The device according to any one of the claims 1 to 6, characterized in that the course of face (17) of end projection (19) or the course of recess (7) of ring (6) in section through axis (22) of movable part (4) has a bend or buckle site (23) located at a distance from the surface of movable part (4) which is less than half, preferably less than one third, of the space between the wall (20) of orifice (2) of housing (1) and the surface of movable part (4).

8. The device according to any one of the claims 1 to 7, characterized in that the linear partial area emanating from end point (18) of end projection (19) of sleeve (5) is inclined at an angle (A) of 50 to 90 degrees to the axis (22) of movable part (4) and that a linear partial area emanating from bend site (23) forms an angle of 0 to 70 degrees with the axis (22) of movable part (4).

9. The device according to any one of the claims 1 to 8, characterized in that ring (6) is disposed towards the pressure space at a distance from the preferably plane front face (30) facing away from the pressure space of an intermediary sleeve (3) surrounding movable part (4) and located in the orifice (2) of housing (1).

10. The device according to claim 9, characterized in that sleeve (5) projecting with its end projection (19) into recess (7) of ring (6) is kept in position by means of a pressure bushing (10) preferably held in turn by a releasable holding element (11) and is optionally forced by a force directed substantially axially towards the pressure space in the direction of the front face (30) of the intermediary sleeve (3) disposed in orifice (2).

11. The device according to any one of the claims 1 to 10, characterized in that the length of sleeve (5) is equal to, or greater than, its outer diameter.

12. The device according to any one of the claims 7 to 11, characterized in that starting from bend site (23), a partial area curving away from the movable part (4) outwards adjoins sleeve (5) up to the abutting point (24) of supporting ring (9).

13. The device according to any one of the claims 7 to 12, characterized in that the first partial area of end projection (19) of sleeve (5) has a convex curvature up to the bend site (23).

14. The device according to any one of the claims 1 to 13, characterized in that the sleeve (5) is made of steel or a non-ferrous metal alloy, in particular a copper alloy.

15. The device according to any one of the claims 1 to 14, characterized in that the partial areas of linear course of the section of faces (17, 17', 17'', 17''') are of different inclination in relation to the longitudinal axis of the movable part (4), the inclination in the first partial area being greater than that in the partial area adjacent this partial area.

16. The device according to any one of the claims 1 to 15, characterized in that the curvature of the course in the individual partial areas is changed over the length of the partial area.

## Revendications

1. Dispositif pour étancher les parties mobiles d'appareils à haute pression, de préférence les plongeurs (4) ou pistons des pompes à haute pression agités de manière oscillante, en particulier pour les milieux liquides, les arbres tournants d'appareils à haute pression, ou similaires, avec un anneau (6), de préférence pourvu d'un anneau précontraint (8), situé au côté refoulement de la pompe dans l'orifice (2) à étancher, l'anneau (6) étant apte à être assujetti aux forces du milieu comprimé dirigées sensiblement parallèles à l'axe (22) de la partie mobile et étant formé en matériau plastique et/ou élastiquement déformable et transversé par la partie mobile (4), le bout de l'anneau (6) au côté refoulement de la pompe ayant un évidement (7) périphérique tourné vers la partie mobile (4), l'evidement (7) recevant la saillie terminale (19) périphérique d'un manchon (5) de préférence en une partie, la saillie terminale (19) située au côté refoulement, tournée vers la partie mobile (4) et adaptée à l'évidement (7) avec contact de surface, un anneau d'appui (9) étant inséré dans la région de l'orifice (2) éloignée de la partie mobile (4) entre l'anneau (6) et le manchon (5), l'anneau d'appui (9) s'appuyant par une de ses surfaces (15) sur l'anneau (6) et par une autre de ses surfaces (16) sur le manchon (5), l'anneau (6) étant serré contre le manchon (5) par la pression régnant dans l'espace de pression et serrant la saillie terminale (19) contre la partie mobile (4) pour étancher l'espace de pression, caractérisé en ce que la (les) surface(s) (17, 17', 17'', 17''') de la saillie terminale (19) du manchon (5) adjacentes à la surface (40) de l'évidement (7) de l'anneau (6) dans une section par l'axe (22) de la partie mobile (4), à partir de leur point terminal (18) au côté refoulement de la pompe adjacent à la partie mobile (4) jusqu'à leurs bouts situés dans la paroi (20) de l'orifice (2), démontrent un cours s'écartant d'une droite continue et comprennent au moins une région partielle droite et/ou au moins une région partielle courbée.

2. Dispositif selon la revendication 1, caractérisé en ce que le manchon (5) est pourvu dans la région du contact de surface avec l'anneau (6) et l'anneau d'appui (9) à partir de la surface de la partie mobile (4) jusqu'à la paroi (20) de l'orifice (2), en particulier dans la région de la saillie terminale (19), d'au moins deux régions partielles, la première région partielle, la plus proche à l'espace de pression, à partir du bout terminal (18) à côté refoulement de la pompe et adjacent à la partie mobile étant formée en direction contre à l'espace de pression avec une augmentation de la rigidité locale contre la déformation élastique concentrique et radiale par rapport à l'unité longitudinale que celle de la deuxième région adjacente à celle-ci.

3. Dispositif selon la revendication 1 ou 2, caractérisé en ce que le cours comprenant la(les) région(s) partielle(s) courbée(s) et/ou droite(s) ne s'étend que jusqu'au point d'appui (24) de l'anneau d'appui (9) sur le manchon (5).

4. Dispositif selon une des revendications 1 à 3, caractérisé en ce qu'un cours sensiblement droit ou plan s'étend sur la région lelong de laquelle le manchon (5) et l'anneau d'appui (9) sont en contact de surface.

5. Dispositif selon une des revendications 1 à 4, caractérisé en ce que dans une section par l'axe (22), le cours de l'anneau d'appui (9), à partir de son point terminal (44) à côté refoulement de la pompe, adjacent au boîtier (1) contenant la paroi (20) de l'orifice (2), démontre au moins partiellement un cours courbé et passe, de préférence de manière continue, dans le cours de la surface (17,17', 17'', 17''') de la saillie terminale (19) du manchon (5).

6. Dispositif selon une des revendications 1 à 5, caractérisé en ce que le cours de la saillie terminale (19) en section est subdivisé en deux ou trois surfaces (17, 17', 17'', 17''') consécutives droites et/ou courbées d'une pente ou courbure différente.

7. Dispositif selon une des revendications 1 à 6, caractérisé en ce que le cours de la surface (17) de la saillie terminale (19) ou le cours de l'évidement (7) de l'anneau (6) en section par l'axe (22) de la partie mobile (4) en section démontre un lieu (23) de courbage ou de flambage situé à une distance de la surface de la partie mobile (4) qui est moindre que la moitié, de préférence moindre que le tiers, de l'espace entre le boîtier (1) et las surface de la paroi (20) de l'orifice (2) dans la partie mobile (4).

8. Dispositif selon une des revendications 1 à 7, caractérisé en ce que la région partielle droite émanant du point terminal (18) de la saillie terminale (19) est inclinée vers l'axe (22) de la partie mobile (4) dans un angle (A) de 50 à 70 degrés et qu'une région partielle droite émanant du lieu de flambage (23) forme un angle de 0 degrés à 70 degrés avec l'axe (22) de la partie mobile (4).

9. Dispositif selon une des revendications 1 à 8, caractérisé en ce que l'anneau (6) est disposé vers l'espace de pression à distance d'une face (30) de préférence plane éloignée de l'espace de pression dans un manchon intermédiaire (3) entourant la partie mobile (4) et disposé dans l'orifice (2) du boitier (1).

10. Dispositif selon la revendication 9, caractérisé en ce que le manchon (5) saillant par sa saillie terminale (19) dans l'évidement (7) de l'anneau (6) est maintenu en position au moyen d'une boîte de pression ou de serrage (10) qui est de préférence à son tour maintenue par un élément de serrage (11) amovible, le manchon (5), le cas échéant, étant serré par une force dirigée sensiblement axialement vers l'espace de pression, en direction de la face (30) du manchon intermédiare (3) disposé dans l'orifice (2).

11. Dispositif selon une des revendications 1 à 10, caractérisé en ce que le manchon (5) est d'une longueur égale à, ou plus grande que, son diamètre extérieur.

12. Dispositif selon une des revendications 7 à 11, caractérisé en ce qu'à partir du lieu de flambage (23), une région partielle courbée vers l'extérieur par rapport à la partie mobile (4) s'étend jusqu'au point d'appui (24) de l'anneau d'appui (9) sur le manchon (5).

13. Dispositif selon une de revendications 1 à 12, caractérisé en ce que la première région partielle de la saillie terminale (19) du manchon (5) est d'une courbure convexe jusqu'au lieu de flambage (23).

14. Dispositif selon une des revendications 1 à 13, caractérisé en ce que le manchon (5) est formé en acier ou en un alliage de métaux non ferreux , en particulier un alliage cuivreux.

15. Dispositif selon une des revendications 1 à 14, caractérisé en ce que les régions partielles de cours droit de la section des surfaces (17, 17', 17'', 17''') sont d'une pente différente par rapport à l'axe longitudinal de la partie mobile (4), la pente dans la première région partielle étant plus grande que celle dans la région partielle adjacente à cette région partielle.

16. Dispositif selon une des revendications 1 à 15, caractérisé en ce que la courbure du cours dans les régions partielles individuelles est changée sur la longueur de la région partielle.
